# EUROPÄISCHE PATENTSCHRIFT

(11) **EP 1 134 549 B1**
(45) Veröffentlichungstag und Bekanntmachung des Hinweises auf die Patenterteilung: **17.12.2008**
(21) Anmeldenummer: 01104212.4
(22) Anmeldetag: 22.02.2001
(51) Int. Cl.: G01C 21/28

(54) **Navigationssystem**
Navigation system
Système de navigation

(30) Priorität: 15.03.2000 DE 10012471
(43) Veröffentlichungstag der Anmeldung: 19.09.2001
(73) Patentinhaber: ROBERT BOSCH GMBH, 70442 Stuttgart (DE)
(72) Erfinder: Hürtgen, Bernd, Dr., 31079 Sibbesse (DE); Kersken, Ulrich, 31199 Diekholzen (DE)

(56) Entgegenhaltungen:
- EP-A- 0 390 052
- EP-A- 0 738 946
- EP-A- 0 782 118

## Beschreibung

### Stand der Technik

Die Erfindung geht aus von einem Navigationssystem nach der Gattung des unabhängigen Patentanspruchs.

Es sind bereits Navigationssysteme bekannt, bei denen Positionsinformationen und Bewegungsinformationen einer Routenvorschlagsvorrichtung zugeführt werden. Weiterhin nutzt die Routenvorschlagsvorrichtung Karteninformationen, die von einem Kartenspeicher zur Verfügung gestellt werden. Problematisch ist dabei, dass insbesondere bei langen zurückgelegten Wegen die Positionsinformationen nicht mehr präzise sind, so dass es zu Abweichungen der ermittelten Position von der tatsächlichen Position kommt. Navigationssystem nutzen daher zusätzliche Informationen; beispielsweise wird durch einen Vergleich der Karteninformationen mit den Positionsinformationen eine Korrektur der Positionsinformationen vorgenommen.

Aus der EP 0 782 118 A1 ist ein Navigationssystem für Fahrzeuge bekannt, bei dem eine Videokamera zur Erkennung eines besonderen Objektes dieses erfasst und anhand der Auswertung des besonderen Objektes feststellt, auf welcher Straße sich ein Fahrzeug bewegt. Insbesondere ist es auch möglich, Abbiegepunkte zu erfassen.

Aus der EP 0 738 946 A1 ist ein automatisches Fahrsystem für Fahrzeuge bekannt, bei dem zur Straßenzustandserkennung und insbesondere zur Fahrbahnerkennung Bilder der vor einem Fahrzeug liegenden Fahrbahn aufgenommen und ausgewertet werden.

### Vorteile der Erfindung

Das erfindungsgemäße Navigationssystem mit den Merkmalen des unabhängigen Patentanspruchs hat demgegenüber den Vorteil, dass durch die Auswertung zusätzlicher Informationen eine Verbesserung der Navigation bzw. der Routenvorschläge möglich ist. Dazu werden Bildinformationen der Umgebung z.B. optische Informationen für das des Navigationssystems herangezogen. Erfindungsgemäß werden auch Positionsinformationen berücksichtigt, die gegebenenfalls durch die Bildinformationen korrigiert werden.

Weitere Vorteile ergeben sich durch die Merkmale der abhängigen Patentansprüche. Besonders einfach erfolgt die Verwendung der Bildinformationen, indem markante Objekte in der Umgebung des Navigationssystems erkannt werden. Dabei kann auch die relative Bewegung des Navigationssystems oder die Lage des Navigationssystems relativ zu dem erkannten Objekt Verwendung finden. Die so erkannten Objekte können dann auch mit Karteninformationen verglichen werden, so dass die Identifizierung von markanten Objekten erleichtert wird. Weiterhin können die Bildinformationen auch mit Informationen von Bewegungssensoren verknüpft werden. Zur Bilderzeugung werden vorteilhafterweise eine Videokamera und/oder eine Infrarotkamera und/oder eine Radarantenne verwendet.

### Zeichnungen

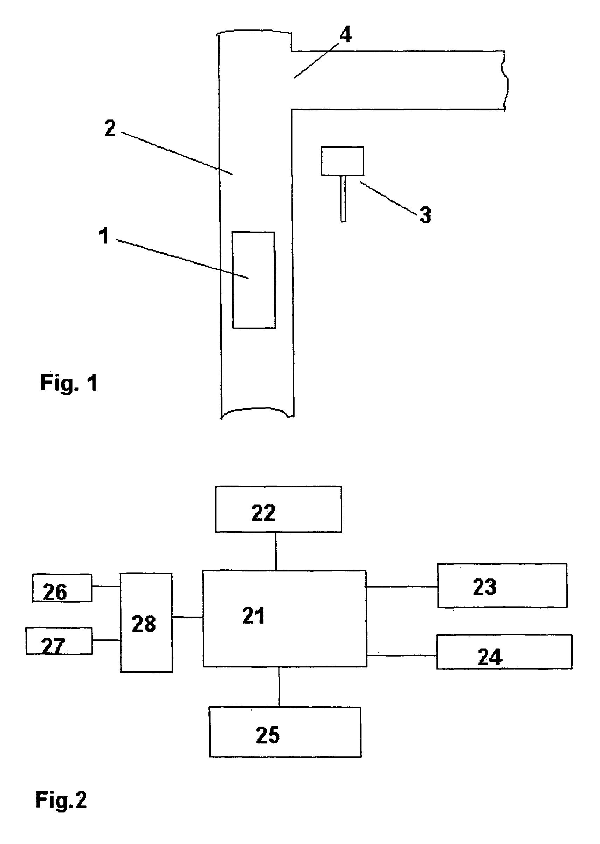

Ausführungsbeispiele der Erfindung sind in den Zeichnungen dargestellt und in der nachfolgenden Beschreibung näher erläutert. Es zeigen die Figur 1 ein Kraftfahrzeug auf einer Strasse und die Figur 2 den internen Aufbau eines erfindungsgemäßen Navigationssystems.

### Beschreibung

In der Figur 1 wird ein Kraftfahrzeug 1 gezeigt, welches sich auf einer Strasse 2 bewegt. In dem Kraftfahrzeug 1 ist ein Navigationssystem angeordnet, welches dem Fahrer Routenvorschläge unterbreitet. Derartige Routenvorschläge dienen dazu, dem Fahrer die Orientierung bzw. das Auffinden einer Fahrtroute zu einem gewünschten Ziel zu erleichtern. Dazu gibt der Fahrer in das Navigationssystem ein gewünschtes Ziel ein und das Navigationssystem unterstützt ihn durch Routenvorschläge, d. h. Anweisungen, welchen Fahrweg der Fahrer zum gewünschten Ziel nehmen soll.

Üblicherweise weist dazu ein Navigationssystem einen Kartenspeicher auf, in dem geographische Informationen gespeichert sind. Weiterhin weisen übliche Navigationssysteme Ortungs- und Positionsvorrichtungen auf. Ein Beispiel für eine derartige Positionsvorrichtung oder Ortungsvorrichtung ist beispielsweise das satellitengestützte GPS-System, bei dem durch Anpeilen von Satelliten eine Ortsbestimmung erfolgen kann. Weiterhin sind der bewegungs- oder beschleunigungsorientierte Ortungs- oder Positionssysteme bekannt, beispielsweise durch die Verwendung von Beschleunigungssensoren, Drehratensensoren, Gyroskope oder Sensoren, die die Bewegungen der Räder des Kraftfahrzeuges gegenüber dem Untergrund feststellen. Alle Ortungs- und Positionssysteme weisen einen gewissen Messfehler auf, der sich bei langen Fahrstrecken akkumulieren kann. Wenn die Position nicht eindeutig bestimmt werden kann, kann es zu fehlerhaften Routenvorschlägen des Navigationssystems kommen, d. h. der Fahrer erhält einen fehlerhaften Routenvorschlag oder aber der Routenvorschlag ist nicht zeitlich angepasst, beispielsweise könnte ein Befehl zum Abbiegen erst dann gegeben werden, wenn das Fahrzeug bereits an der Abbiegung vorbeigefahren ist.

Herkömmliche Navigationssystem kontrollieren daher die Ortungs- und Positonsinformationen durch einen Vergleich mit den gespeicherten geographischen Informationen bzw.

Karteninformationen des Kartenspeichers auf Plausibilität. Wenn sich aufgrund der Ortungs- und Positionsinformationen das Kraftfahrzeug für eine längere Zeit parallel zu einer Straße bewegt und dabei in einem Bereich sein soll, in dem keine Straße existiert, so folgert das Navigationssystem, dass sich das Kraftfahrzeug auf der Straße befindet und korrigiert die Ortungs- und Positionsinformationen entsprechend. Dieses Verfahren wird üblicherweise als Map-matching bezeichnet.

Weiterhin kann der Fahrer eines Kraftfahrzeuges auch von sich aus feststellen, dass ein Fehler des Navigationssystems vorliegt, da auch der Fahrer eines Kraftfahrzeugs in der Lage ist, sich zu orientieren, beispielsweise an einem Verkehrsschild 3 wie dies in der Figur 1 gezeigt wird. Der Fahrer kann dann darauf reagieren, indem er die Routenvorschläge des Navigationssystems ignoriert und wie dies beispielsweise in der Figur 1 gezeigt wird, sich anhand des Verkehrsschildes 3 orientiert oder anhand anderer geographischer Informationen wie beispielsweise der Querstraße 4. Erfindungsgemäß wird nun vorgesehen, eine Bilderzeugungseinrichtung vorzusehen, die ein Abbild der Umgebung des Navigationssystems erzeugt und dass das Navigationssystem dieses Bild bei der Erzeugung der Routenvorschläge berücksichtigt.

Besonders einfach können die Bildinformationen benutzt werden, wenn sie zum Map-matching herangezogen werden. Wenn das Fahrzeug 1 der Figur 1 die Querstraße 4 passiert, so ist damit ein eindeutiger Punkt auf einer digitalen Karte bestimmbar. Durch Auswertung eines Bildes der Umgebung des Kraftfahrzeuges 1 wird somit erkannt, dass das Kraftfahrzeug 1 gerade die Querstraße 4 passiert hat und es kann dann ein eindeutiges Map-matching erfolgen. Das Navigationssystem weist somit eine Bilderzeugungseinrichtung auf, die ein Bild der Umgebung des Navigationssystems erzeugt. Eine derartige Bilderzeugungseinrichung kann beispielsweise in einer Videokamera oder einer Infrarotkamera oder einer Radarantenne bestehen. Es erfolgt dann eine Auswertung dieses Bildes der Umgebung des Navigationssystems, um bestimmte markante Objekte in der Umgebung des Navigationssystems bzw. des Kraftfahrzeuges 1 zu erkennen. Derartige markante Objekte in der Umgebung des Nagigationssystems können beispielsweise Verkehrsschilder 3 oder Querstraßen 4 oder Tunnel oder Brücken oder dergleichen sein. Weiterhin kann durch Auswertungen des Bildes auch eine Information bezüglich der Bewegung des Navigationssystems erfolgen, beispielsweise ein Drehwinkel relativ zur Straße, eine Information bezüglich der Geschwindigkeit des Kraftfahrzeuges oder dergleichen. All diese Informationen werden dann zusätzlich vom Navigationssystem berücksichtigt. In der Regel erfolgt diese Berücksichtigung zusätzlich zu den üblichen Ortungs- und Positionsvorrichtungen bzw. zusätzlich zu der sonst üblichen Bewegungssensorik.

In der Figur 2 wird schematisch der Aufbau eines erfindungsgemäßen Navigationssystems gezeigt. Zentrale Komponente dieses Navigationssystems ist eine Routenvorschlagsvorrichung 21, die in der Regel als Rechner ausgebildet ist. Dieser Rechner 21 hat Zugriff auf Karteninformationen, die in einem Kartenspeicher 25 enthalten sind. Weiterhin hat dieser Rechner 21 Zugriff auf Ortungs- oder Positionsinformationen, die von einem Ortungs- oder Positionssystem 23 zur Verfügung gestellt werden. Weiterhin hat der Rechner 21 Zugriff auf Informationen weiterer Sensoren 24, die ihm beispielsweise Informationen über die Bewegung des Fahrzeugs oder dergleichen geben. Weiterhin werden dem Rechner 21 noch Informationen von einer Bildauswerteeinheit 28 zugeführt, die gegebenenfalls auch ein Teil des Rechners 21 sein kann. Die Bildauswerteeinheit 28 erhält Informationen von einer Video- oder Infrarotkamera 26 und gegebenenfalls von einer Radarantenne 27. Wenn der Rechner bzw. die Routenvorschlagsvorrichtung 21 einen entsprechenden Routenvorschlag für den Benutzer des Navigationssystems errechnet haben, so wird dieser über die Ausgabeeinheit 22 ausgegeben.

Bei dem Ortungs- oder Positionssystem 23 handelt es sich beispielsweise um ein GPS-System und/oder ein Gyroskop. Bei den Sensoren 24 handelt es sich beispielsweise um Radsensoren oder Sensoren eines ABS-Systems, die Impulse in Abhängigkeit von der Umdrehung eines Rades liefern. Bei dem Kartenspeicher 25 handelt es sich um ein Speicherelement, welches zum Abspeichern großer Datenmengen geeignet ist, beispielsweise um eine CD-ROM. In dem Kartenspeicher 25 sind geographische Informationen, beispielsweise in der Form einer digitalen Karte, gespeichert. Weiterhin enthält dieser Kartenspeicher weitere geographische Informationen, beispielsweise markante Punkte in der Umgebung, Informationen über die Schönheit einer Fahrtstrecke, und dergleichen.

Bei der Kamera 26 handelt es sich beispielsweise um eine Videokamera oder Infrarotkamera, die ein Bild der Umgebung des Navigationssystems bzw. des Kraftfahrzeugs in dem das Navigationssystem beispielsweise eingebaut ist, gibt. Alternativ oder zusätzlich ist noch ein Radarantenne 27 vorgesehen, welches ebenfalls ein Bild der Umgebung erzeugt. Wesentlich ist, dass ein Umgebungsbild des Navigationssystems erzeugt wird, welches dann ausgewertet wird. Die Bildauswertungseinheit 28 ist hier nur schematisch als separate Einheit dargestellt. Üblicherweise wird man für die Bildauswertung ebenfalls einen Rechner nutzen, so dass bei ausreichender Leistungsfähigkeit des Rechners auch die Bildauswerteeinheit 28 und die Routenvorschlagsvorrichtung 21 in einem einzigen Rechner realisiert sein können.

Bei der Ausgabeeinheit 22 sind alle Vorrichtungen denkbar, die einem Benutzer des Navigationssystems Informationen geben können. Beispielsweise kann die Ausgabeeinheit in einem Display und/oder in einer Sprachausgabe bestehen.

Die Routenvorschlagsvorrichung berücksichtigt zur Erstellung der Routenvorschläge nicht nur die Informationen des Ortungs- und Positionssystem 23 und der Bewegungssensoren 24, sondern zusätzlich noch die Bildinformationen, die von der Kamera 26 bzw. dem Radar 27 zur Verfügung gestellt werden.

Die Funktionsweise herkömmlicher Navigationssysteme können so vielfältig verbessert werden.

Durch Auswertung des Bilds kann die Fahrspur ermittelt werden und damit bei unsicherem Map-matching (Autobahnausfahrt, spitzwinklige Y-Kreuzung) schneller eine eindeutige Position bestimmt werden. Daraufhin können Fahrempfehlungen wiederholt oder situationsgerecht angepasst werden bzw. ggf. die Route neu berechnet werden.

Durch Auswertung des Bilds kann die Drehbewegungen (des Fahrzeugs) erkannt und berechnet werden und diese Werte können anstelle oder zur Unterstützung der Gyro-Information genutzt werden. Durch Auswertung des Bilds können langsame Drehbewegungen besser erkannt und bestimmt werden.

Durch Auswertung des Bilds können Geschwindigkeit und zurückgelegter Weg bestimmt werden und diese Werte anstelle oder zur Unterstützung der bekannten Wegsensoren genutzt werden.

Durch Auswertung des Bilds kann die relative Lage des Fahrzeugs zur Fahrbahn erkannt werden.

Durch Auswertung des Bilds kann das Verlassen des bzw der Eintritt in das dig. Gebietes bzw der Route schneller und sicherer bestimmt werden

Durch Auswertung des Bilds kann das Verlassen bzw. die Wiederaufnahme der Route (z.B.Rastplatz) schneller und sicherer bestimmt werden.

Durch Auswertung des Bilds können auch nicht gefahrene Wege (Seitenstrassen, Abzweigungen) und passierte Objekte (Brücke, Tunnel, Eisenbahnlinie, sonstige POIs) für das Map-matching genutzt werden.

Durch Auswertung des Bilds kann eine Selbstkalibirierung von Navigationskomponenten durchgeführt oder Ungenauigkeiten /Drift der Komponenten kompensiert werden.

Durch Auswertung des Bilds können Strassenschilder und Verkehrszeichen erkannt und für die Positionsbestimmung (Ortsein- und -ausgang, BAB-Schilder) und Fahrempfehlungen sowie für den Zeitpunkt der Ausgabe der Fahrempfehlungen genutzt werden.

## Patentansprüche

1. Navigationssystem mit einer Routenvorschlagsvorrichtung (21), die unter Berücksichtigung von Karteninformationen aus einem Kartenspeicher (25) Routenvorschläge erstellt, wobei eine Bilderzeugungseinrichtung (26, 27, 28) vorgesehen ist, die ein Bild der Umgebung des Navigationssystems erzeugt, wobei die Routenvorschlagsvorrichtung (21) das Bild der Bilderzeugungseinrichtung (26, 27, 28) berücksichtigt und wobei zusätzlich von der Routenvorschlagsvorrichtung (21) für die Erstellung des Routenvorschlags Informationen von weiteren Navigationskomponenten (23, 24) berücksichtigt werden, **dadurch gekennzeichnet, dass** durch die Auswertung des Bildes eine Selbstkalibrierung der Navigationskomponenten (23, 24) durchgeführt oder Ungenauigkeiten/Drift der Navigationskomponenten (23, 24) kompensiert werden.

2. Navigationssystem nach Anspruch 1, **dadurch gekennzeichnet, dass** durch Auswertung des Bildes Objekte in der Umgebung des Navigationssystems erkannt werden.

3. Navigationssystem nach Anspruch 2, **dadurch gekennzeichnet, dass** durch Auswertung des Bildes die (Dreh-) Bewegung oder Lage des Navigationssystems relativ zu den erkannten Objekten bestimmt wird.

4. Navigationssystem nach Anspruch 2 oder 3, **dadurch gekennzeichnet, dass** die erkannten Objekte mit Karteninformationen zu den Objekten verglichen werden.

5. Navigationssystem nach einem der vorhergehenden Ansprüche, **dadurch gekennzeichnet, dass** als weitere Navigationskomponenten Bewegungssensoren (24) und/oder ein Positionssystem (23) vorgesehen sind.

6. Navigationssystem nach einem der vorhergehenden Ansprüche, **dadurch gekennzeichnet, dass** die Bilderzeugungsvorrichtung (26, 27, 28) eine Video-oder Infrarotkamera (26) und/oder Radarantenne (27) aufweist.

7. Navigationssystem nach einem der vorhergehenden Ansprüche, **dadurch gekennzeichnet, dass** die Routenvorschlagsvorrichtung (21) für den Zeitpunkt der Ausgabe eines Routenvorschlags das Bild der Bilderzeugungsvorrichtung (26, 27, 28) berücksichtigt.

## Claims

1. Navigation system having a route-proposing device (21) which produces route proposals taking into account map information from a map memory (25), wherein an image-generating device (26, 27, 28) is provided which generates an image of the surroundings of the navigation system, wherein the route-proposing device (21) takes into account the image of the image-generating device (26, 27, 28), and wherein information from further navigation components (23, 24) is additionally taken into account by the route-proposing device (21) for the production of the route proposal, **characterized in that**, by evaluating the image, self-calibration of the navigation components (23, 24) is carried out or inaccuracies/drift of the navigation components (23, 24) are compensated.

2. Navigation system according to Claim 1, **characterized in that** objects in the surroundings of the navigation system are detected by evaluating the image.

3. Navigation system according to Claim 2, **characterized in that** the (rotation) movement or position of the navigation system relative to the detected objects is determined by evaluating the image.

4. Navigation system according to Claim 2 or 3, **characterized in that** the detected objects are compared with map information relating to the objects.

5. Navigation system according to one of the preceding claims, **characterized in that** movement sensors (24) and/or a position system (23) are provided as further navigation components.

6. Navigation system according to one of the preceding claims, **characterized in that** the image-generating device (26, 27, 28) has a video camera or infrared camera (26) and/or a radar antenna (27).

7. Navigation system according to one of the preceding claims, **characterized in that** the route-proposing device (21) takes into account the image of the image-generating device (26, 27, 28) for the time when a route proposal is output.

## Revendications

1. Système de navigation comportant un dispositif (21) proposant des trajets, les propositions de trajet étant établies en tenant compte d'informations cartographiques provenant d'une mémoire de cartes (25),
- une installation de génération d'image (26, 27, 28) étant prévue pour générer une image de l'environnement du système de navigation,
- le dispositif de proposition de trajet (21) tenant compte de l'image fournie par l'installation de génération d'image (26, 27, 28), et
- en plus du dispositif de proposition de trajet (21) pour établir la proposition de trajet, on tient compte d'informations d'autres composants de navigation (23, 24),
**caractérisé en ce que**
par l'exploitation de l'image, on effectue un autocalibrage des composants de navigation (23, 24) ou on compense les imprécisions/dérives des composants de navigation (23, 24).

2. Système de navigation selon la revendication 1,
**caractérisé en ce que**
par l'exploitation de l'image, on reconnaît les objets dans l'environnement du système de navigation.

3. Système de navigation selon la revendication 2,
**caractérisé en ce que**
par l'exploitation de l'image, on détermine le mouvement (rotation) ou la position du système de navigation par rapport aux objets reconnus.

4. Système de navigation selon la revendication 2 ou 3,
**caractérisé en ce qu'**
on compare les objets reconnus aux informations cartographiques concernant les objets.

5. Système de navigation selon les revendications précédentes,
**caractérisé en ce que**
les autres composants de navigation sont des capteurs de mouvement (24) et/ou un système de positionnement (23).

6. Système de navigation selon les revendications précédentes,
**caractérisé en ce que**
le dispositif de génération d'image (26, 27, 28) comporte une caméra vidéo ou une caméra infrarouge (26) et/ou des antennes de radar (27).

7. Système de navigation selon les revendications précédentes,
**caractérisé en ce que**
le dispositif de proposition de trajet (21) tient compte de l'image fournie par le dispositif générateur d'image (26, 27, 28) correspondant à l'installation de l'émission d'une proposition de trajet.
